# EUROPÄISCHE PATENTANMELDUNG

(11) **EP 0 839 639 A1**
(43) Veröffentlichungstag der Anmeldung: **06.05.1998**
(21) Anmeldenummer: 97113841.7
(22) Anmeldetag: 11.08.1997
(51) Int. Cl.: B30B 15/06

(54) **Asbestos-free press pad**

(30) Priorität: 30.10.1996 DE 29618864 U
(71) Anmelder: RHEINISCHE FILZTUCHFABRIK GmbH, 52222 Stolberg/Rhld.. (DE)
(72) Erfinder: Hennecken, Bruno, 52080 Aachen (DE); Espe, Rolf, 44795 Bochum (DE)
(74) Vertreter: Schubert, Siegmar, Dipl.-Ing.

(57) **Zusammenfassung**

Ein Preßpolster aus asbestfreiem Material, beispielsweise zum Einsatz in Kurztakt- und Etagenpressen für die Beschichtung von Spanplatten oder anderen Trägermaterialien mit Melamin, Folien oder anderen Materialien zur Oberflächenvergütung mit einem textilen Gewebe (1) aus hitzebeständigem Garn, insbesondere aus aromatischem Polyamid, das mit anderen Garnmaterialien gemischt sein kann, enthält Metallfäden zwischen 50 Gewichtsprozent und 98 Gew.%, vorzugsweise zwischen etwa 71 Gewichtsprozent und 92 Gew.% bezogen auf das Gesamtgewicht des Preßpolsters. Damit die Herstellung eines solchen Preßpolsters zuverlässig, insbesondere ohne Nadelbrüche erfolgt und das fertige Preßpolster gleichmäßige Wärmeübergangseigenschaften hat, ist auf der Oberseite und/oder auf der Unterseite des Gewebes (1) ein Vlies (2 bzw. 3) gleichmäßig aufgeklebt.

## Beschreibung

Die Erfindung betrifft ein Preßpolster aus asbestfreiem Material, beispielsweise zum Einsatz in Kurztakt- und Etagenpressen für die Beschichtung von Spanplatten oder anderen Materialien nach dem Oberbegriff des Anspruchs 1.

Derartige Preßpolster gelangen generell in Hoch- und Niederdruckpressen verschiedener Art, z.B. den genannten Kurztaktpressen oder Etagenpressen für die Beschichtung von Spanplatten mit Melaminfilm, Hochdruckpressen für die Herstellung von Hochdrucklaminaten und Pressen für die Beschichtung von Trägermaterial verschiedener Art mit Holzfurnier oder Folien oder dergleichen für eine Oberflächenvergütung zur Anwendung.

Um ein Preßpolster hinsichtlich seines Wärmeübergangs zu verbessern, ist es insbesondere bekannt, in dieses Metallfäden einzuweben, und zwar erforderlichenfalls einen hohen Anteil wie in Anspruch 1 angegeben.

Abgesehen davon weisen übliche Preßpolster als asbestfreies Material eine Gewebeschicht aus einem textilen Gewebe auf, deren Oberfläche so rauh und unruhig ist, daß sich bei Preßvorgängen trotz Zwischenlage eines Preßblechs aus Metall die Oberflächenstruktur in störender Weise auf dem hergestellten Laminat abzeichnen kann, was als störend empfunden wird, wenn sehr hohe Anforderungen an die Gleichmäßigkeit der Laminatoberfläche gestellt werden.

Um dem abzuhelfen, ist bereits ein Preßpolster gemäß dem Oberbegriff des Anspruchs 2 mit einem textilen Gewebe aus einem hitzebeständigen Garn, insbesondere aus aromatischem Polyamid, welches gegebenenfalls mit anderen Garnmaterialien vermischt ist und das bezogen auf das Gesamtgewicht des Preßpolsters Metallfäden in einem Anteil zwischen 0 und etwa 70 Gewichtsprozent, vorzugsweise zwischen etwa 0 und etwa 40 Gewichtsprozent enthält, bekannt, bei dem auf die Oberseite und/oder auf die Unterseite der Gewebeschicht ein Vlies fest aufgebracht ist (EP 0 561 158 B1). In diesem Zusammenhang ist es im einzelnen bekannt, daß das Vlies auf die Oberseite und/oder die Unterseite der Gewebeschicht aufgenadelt ist. Damit wird erreicht, daß sich beim Pressen keine störenden Abdrücke der Preßpolsterstruktur auf der Laminatoberfläche ausbilden, auch nicht bei sehr hohen Anforderungen an die Oberfläche eines in einer Hochdruckpresse hergestellten Laminats.

Zum Verbinden des Vlieses mit der Gewebeschicht wurde in der Vergangenheit von einem Verkleben abgeraten, weil sich dadurch nebeneinander Klebstellen unterschiedlicher Dichte ergeben würden. Auch wurde der Nachteil eines ungleichmäßigen Wärmeübergangs, bedingt durch die ungleichmäßige Klebstoffschicht befürchtet.

Andererseits hat es sich in der Praxis gezeigt, daß es bei verschiedenen Einsatzzwecken insbesondere dann, wenn ein höherer Metallanteil in dem Preßpolster realisiert werden soll, zu Nadelbrüchen beim Benadelungsvorgang kommt, was insbesondere die Verwendung eines Metallanteils von über ca. 70 Gewichtsprozent weitgehend verbietet.

Der Erfindung liegt daher die Aufgabe zugrunde, ein Preßpolster mit aufgebrachtem Vlies zu schaffen, bei dessen Herstellung der Befestigungsvorgang zuverlässig, insbesondere ohne Nadelbrüche verläuft und bei deren Anwendung keine Nachteile hinsichtlich eines ungleichmäßigen Wärmeübergangs entstehen.

Zur Lösung dieser Aufgabe hat sich eine geeignete Befestigungstechnik überraschenderweise dadurch ergeben, daß auf der Oberseite und/oder der Unterseite des Gewebes ein Vlies gleichmäßig aufgeklebt ist (Anspruch 1) bzw. das Vlies auf der Gewebeschicht gleichmäßig geklebt ist (Anspruch 2). Wichtig ist also nicht das Aufkleben schlechthin, sondern das gleichmäßige Aufkleben, welches durch verschiedene, inzwischen zur Herstellung des Preßpolsters entwickelte Techniken realisiert werden kann, die ein sehr exaktes und gleichmäßiges Aufbringen eines Klebers bzw. einer chemisch reaktiv verbindenden Schicht gestatten.

Diese Befestigungstechnik hat außer der Lösung der voranstehend genannten Aufgabenstellung den Vorteil, daß der Metallanteil am Gesamtgewicht des Polsters praktisch beliebig sein kann, so daß sich diese Befestigungstechnik auch für solche Polster eignet, die einen höheren Metallanteil erfordern.

Im einzelnen kann die gleichmäßige Klebeschicht gemäß Anspruch 3 durch Aufsprühen des Klebers auf das Preßpolster bzw. dessen Gewebeschicht aufgebracht werden.

Alternativ dazu ist es möglich, den Kleber auf das Preßpolster bzw. dessen Gewebeschicht gemäß Anspruch 4 gleichmäßig aufzuwalzen.

Bei beiden Techniken kann der Kleber sehr genau dosiert und ansatzfrei aufgetragen werden.

Die Verbindung der Vliesschicht mit dem übrigen Preßpolster kann gemäß Anspruch 5 durch einen Schmelzkleber erfolgen. Diese können als typische Verbindungen Copolyamide oder Copolyester enthalten.

Es ist aber auch möglich, die Klebverbindung gemäß Anspruch 8 durch eine doppelseitig selbstklebende Folie zu realisieren, bei der die Gleichmäßigkeit der Verklebung durch die Folienbeschichtung gewährleistet wird.

Alternativ dazu kann die Verbindung des Vlieses auf dem Preßpolster bzw. der Gewebeschicht mit einer thermoplastischen Folie unter Wärmeeinwirkung realisiert sein.

Die insgesamt voranstehenden Folien können gemäß Anspruch 10 aus folgenden Kunststoffen bestehen: Polypropylen, Polyethylen, Polyvinylacetat, Polymethylmethacrylat, Phenoxyharz, Aminoplastharzen, Polyvinylalkoholen.

Um die Oberfläche der aufgeklebten Vliesschicht gegen Anhaften von Epoxidharz, Phenol, Leim und andere Verschmutzungen, die bei dem Produktionsprozeß auftreten können, zu schützen, ist die äußere Oberfläche der Vliesschicht gemäß Anspruch 11 ein- oder beidseitig des Preßpolsters mit einer Oberflächenschutzschicht versehen. Beim bestimmungsgemäßen Einsatz dieses Preßpolsters, d.h. beim Pressen, wird die Vliesschicht durch die darüberliegende Oberflächenschicht geschont. Damit wird insbesondere die schädliche Wirkung einer Reibung vermieden, die sonst infolge der Wärmeausdehnung der Heizplatte und des Preßblechs einerseits und der zu vernachlässigen Ausdehnung des Preßpolsters hervorgerufen wird und auf Dauer zu Bruch und/oder Zerstäubung der feinen Vliesfasern führt.

Die Oberflächenschutzschicht kann gemäß den Ansprüchen 12 und 13 vorteilhaft aus thermoplastischem Metallverbundenfolien, Glasfaser-, Nomex- oder Kevlargewebe bestehen. Davon kann zweckmäßig das Glasfaser-, Nomex- oder Kevlargewebe gemäß Anspruch 14 mit einem Silikonharz oder einem thermoplastischen Kunststoff beschichtet sein, der gute Trenneigenschaften gegenüber Metallen, duroplastischen Kunststoffharzen bzw. thermoplastischen Kunststoffen aufweist.

Bei einigen Anwendungsfällen ist es wünschenswert, das von Hause aus flexible Preßpolster zu versteifen, insbesondere um die Handhabung des Preßpolsters im Produktionsprozeß durch eine einzelne Person zu erleichtern. Diese Versteifung kann durch Aufbringen mindestens einer Aussteifungsschicht in dem Preßpolster erfolgen. Die Aussteifungsschicht ist insbesondere gemäß Anspruch 20 zwischen dem Preßpolster bzw. dessen Gewebeschicht und dem Vlies angeordnet, das gleichmäßig aufgeklebt wird. Das Maß der Aussteifung kann durch die Aussteifungsschichtdicke und die Anzahl der Aussteifungsschichten eingestellt werden.

Um zu vermeiden, daß während des Produktionsprozesses, also der Harzkondensation, entstehender Wasserdampf, der mit organischen bzw. anorganischen Verbindungen wie Formaldehyd, Ammoniak, Phenol, Kresol oder Chloridverbindungen angereichert ist, in das Preßpolster eindringen, wobei die Verbindungen zu einer vorzeitigen Zerstörung der in dem Preßpolster enthaltenen Fasern führen kann, ist dieses nach gleichmäßigen Aufkleben der Vliesschicht mit einer Kantenversiegelung versehen. Die Kantenversiegelung kann insbesondere aus Silikon oder Polytetrafluorethylen bestehen. Vorzugsweise wird die Beschichtung der Seitenkanten gemäß Anspruch 19 in eine Ganzbeschichtung des Preßpolsters erweitert. Mit der Beschichtung wird das Preßpolster gegen Verschmutzung oder Anhaften von beispielsweise Epoxid, Phenol oder Leim geschützt.

Die erfindungsgemäße Lehre kann vorteilhaft auch nach Anspruch 21 bei einem Preßpolster angewendet werden, bei dem das Gewebe (Grundgewebe) bereits mit Vlies benadelt ist. Dies gilt dann, wenn ein vorhandenes, bereits benadeltes Preßpolster nachträglich mit mehr Vliesauflage versehen werden muß.

Als weiterer Vorteil des gleichmäßigen Aufklebens des Vlieses kommt hinzu, daß dieses ohne eine aufwendige Nadelanlage durchgeführt werden kann.

Zwei Ausführungsbeispiele des erfindungsgemäßen Preßpolsters werden im folgenden anhand einer Zeichnung mit zwei Figuren beschrieben. Es zeigt:
- Fig. 1: ein erstes Ausführungsbeispiel des Preßpolsters in einem Querschnitt in auseinandergezogener Darstellung und
- Fig. 2: eine zweite Ausführungsform des Preßpolsters ebenfalls im Querschnitt in auseinandergezogener Darstellung.

In beiden Figuren sind übereinstimmende Schichten mit gleichen Bezugszeichen versehen.

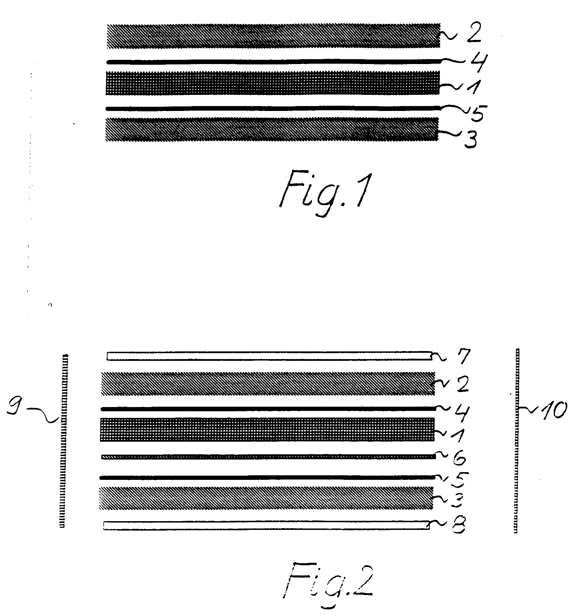

In den Fig. 1 und 2 ist mit 1 eine Gewebeschicht aus hitzebeständigem Garn bezeichnet, welches hier einen hohen Anteil von über 70 Gewichtsprozent Metallfäden aufweist. Diese metallisierte Gewebeschicht kann auch als das eigentliche Preßpolster angesehen werden.

In der Ausführungsform gemäß Fig. 1 ist sowohl auf der Oberseite als auch auf der Unterseite des Preßpolsters bzw. der Gewebeschicht 1 je ein Vlies 2 bzw. 3, welches auch als Vliesschicht bezeichnet ist, aufgeklebt, und zwar mittels einer über die Oberfläche gleichmäßig starken Klebeschicht 4 bzw. 5.

In der Ausführungsform nach Fig. 2 ist das Vlies 2 wie in der Ausführungsform gemäß Fig. 1 über die gleichmäßig starke Klebeschicht 4 mit der Oberseite der Gewebeschicht 1 verklebt. Hingegen befindet sich an der Unterseite der Gewebeschicht 1 eine Aussteifungsschicht 6. Das Vlies 3 ist demgemäß nicht direkt mit der Unterseite der Gewebeschicht 1 mittels der Klebeschicht 5 verklebt, sondern sie steht über die gleichmäßige Klebeschicht 5 und der Aussteifungsschicht 6 mit der Unterseite der Gewebeschicht 1 in Verbindung.

Weiterhin sind die Außenseiten der Vliese 2 und 3 durch die Oberflächenschutzschichten 7 und 8, die auf ihnen aufgebracht sind, geschützt. Im Bereich der Kanten der genannten Schichten ist der Schutz vervollständigt durch je eine rechtwinklig zu den genannten Schichten orientierte Kantenversiegelung 9 und 10, die dicht an die Kanten der Schichten 1 - 8 anschließt.

## Patentansprüche

1. Preßpolster aus asbestfreiem Material, beispielsweise zum Einsatz in Kurztakt- und Etagenpressen für die Beschichtung von Spanplatten oder anderen Trägermaterialien mit Melamin, Folien oder anderen Materialien zur Oberflächenvergütung mit einem textilen Gewebe aus hitzebeständigem Garn, insbesondere aus aromatischem Polyamid, das ggf. mit anderen Garnmaterialien gemischt ist und das bezogen auf das Gesamtgewicht des Preßpolsters Metallfäden in einem Anteil zwischen 50 Gewichtsprozent und 98 Gew.% enthält, vorzugsweise zwischen etwa 71 Gewichtsprozent und 92 Gew.%,
**dadurch gekennzeichnet**,
daß auf der Oberseite und/oder auf der Unterseite des Gewebes ein Vlies gleichmäßig aufgeklebt ist.

2. Preßpolster aus asbestfreiem Material, beispielsweise zum Einsatz in Pressen für die Herstellung von Hochdrucklaminaten, mit einem textilen Gewebe aus einem hitzebeständigen Garn, insbesondere aus aromatischem Polyamid, das ggf. mit anderen Garnmaterialien gemischt ist und das, bezogen auf das Gesamtgewicht des Preßpolsters, Metallfäden in einem Anteil zwischen 0 Gewichtsprozent und etwa 70 Gew.% enthält, insbesondere zwischen etwa 0 Gewichtsprozent und etwa 40 Gew.%, wobei auf die Oberseite und/oder auf die Unterseite der Gewebeschicht ein Vlies fest aufgebracht ist,
**dadurch gekennzeichnet**,
daß das Vlies auf der Gewebeschicht gleichmäßig geklebt ist.

3. Preßpolster nach Anspruch 1 oder 2,
**dadurch gekennzeichnet**,
daß der Kleber auf das Preßpolster bzw. dessen Gewebeschicht aufgesprüht ist.

4. Preßpolster nach Anspruch 1 oder 2,
**dadurch gekennzeichnet**,
daß der Kleber auf das Preßpolster bzw. dessen Gewebeschicht aufgewalzt ist.

5. Preßpolster nach einem der vorangehenden Ansprüche,
**dadurch gekennzeichnet**,
daß die Vliesschicht mit einem Schmelzkleber aufgeklebt ist.

6. Preßpolster nach Anspruch 5,
**dadurch gekennzeichnet**,
daß die Vliesschicht mit einem Polyamid aufgeklebt ist.

7. Preßpolster nach Anspruch 5,
**dadurch gekennzeichnet**,
daß die Vliesschicht mit einem Copolyester aufgeklebt ist.

8. Preßpolster nach Anspruch 1 oder 2,
**dadurch gekennzeichnet**,
daß das Vlies auf dem Preßpolster bzw. der Gewebeschicht durch eine doppelseitig selbstklebende Folie befestigt ist.

9. Preßpolster nach Anspruch 1 oder 2,
**dadurch gekennzeichnet**,
daß das Vlies auf dem Preßpolster bzw. der Gewebeschicht durch eine thermoplastische Folie unter Wärmeeinwirkung aufgebracht ist.

10. Preßpolster nach Anspruch 9,
**dadurch gekennzeichnet**,
daß die Folie aus mindestens einem der folgenden Kunststoffe besteht: Polypropylen, Polyethylen, Polyvinylacetat, Polymethylmethacrylat, Phenoxyharz, Aminoplastharzen, Polyvinylalkoholen.

11. Preßpolster nach einem der vorangehenden Ansprüche,
**dadurch gekennzeichnet**,
daß das Preßpolster außen über dem aufgeklebten Vlies ein- oder beidseitig mit einer Oberflächenschutzschicht versehen ist.

12. Preßpolster nach Anspruch 11,
**dadurch gekennzeichnet**,
daß die Obeflächenschutzschicht aus einer Metallfolie besteht.

13. Preßpolster nach Anspruch 11,
**dadurch gekennzeichnet**,
daß die Oberflächenschutzschicht aus thermoplastischen Metallverbundfolien, Glasfaser-, Nomex- oder Kevlargewebe besteht.

14. Preßpolster nach Anspruch 13,
**dadurch gekennzeichnet**,
daß das Glasfaser-, Nomex- oder Kevlargewebe mit einem Silikonharz oder einem thermoplastischen Kunststoff beschichtet ist, der gute Trenneigenschaften gegenüber Metall aufweist.

15. Preßpolster nach einem der vorangehenden Ansprüche,
**dadurch gekennzeichnet**,
daß das Preßpolster mindestens eine Aussteifungsschicht aufweist.

16. Preßpolster nach Anspruch 15,
**dadurch gekennzeichnet**,
daß die Aussteifungsschicht aus getränktem Glasfasergewebe besteht.

17. Preßpolster nach einem der vorangehenden Ansprüche,
**dadurch gekennzeichnet**,
daß die Seitenkanten des Preßpolsters eine Kantenversiegelung aufweisen.

18. Preßpolster nach Anspruch 17,
**dadurch gekennzeichnet**,
daß die Kantenversiegelung aus Silikon oder Polytetrafluorethylen besteht.

19. Preßpolster nach Anspruch 17 oder 18,
**dadurch gekennzeichnet**,
daß die Kantenversiegelung als Ganzbeschichtung des Preßpolsters erweitert ist.

20. Preßpolster nach Anspruch 15 oder 16 oder einem der Ansprüche 17 - 19, soweit diese auf Anspruch 15 oder 16 bezogen sind,
**dadurch gekennzeichnet**,
daß die Aussteifungsschicht zwischen dem Preßpolster bzw. dessen Gewebeschicht und dem Vlies angeordnet ist, das auf die Aussteifungsschicht gleichmäßig aufgeklebt ist.

21. Preßpolster nach einem der vorangehenden Ansprüche, insbesondere Ansprüche 11 - 20,
**dadurch gekennzeichnet**,
daß das Gewebe bereits mit Vlies benadelt ist.
